# EUROPÄISCHE PATENTSCHRIFT

(11) **EP 0 413 036 B1**
(45) Veröffentlichungstag und Bekanntmachung des Hinweises auf die Patenterteilung: **13.10.1993**
(21) Anmeldenummer: 89114995.7
(22) Anmeldetag: 14.08.1989
(51) Int. Cl.: A47J 37/06

(54) **Vorrichtung zum Erhitzen, Erwärmen oder Warmhalten, insbesondere zum Überbacken von Speisen, insbesondere Salamander**
Device to heat, warm or keep warm, especially for scorching salamanders in particular
Dispositif pour chauffer, réchauffer ou tenir au chaud, en particulier pour gratiner de la nourriture, plus spécifiquement un "salamander"

(43) Veröffentlichungstag der Anmeldung: 20.02.1991
(73) Patentinhaber: MASCHINENFABRIK KURT NEUBAUER GMBH & CO., D-38286 Wolfenbüttel (DE)
(72) Erfinder: Pickavé, Hermann, D-3340 Wolfenbüttel (DE)
(74) Vertreter: Einsel, Martin, Dipl.-Phys.

(56) Entgegenhaltungen:
- CH-A- 610 747
- DE-A- 2 604 922
- DE-U- 8 613 077
- GB-A- 974 759

## Beschreibung

Die Erfindung betrifft eine Vorrichtung zum Erhitzen, Erwärmen oder Warmhalten, insbesondere zum Überbacken von Speisen, insbesondere Salamander, mit einer Grundplatte zur Aufnahme der Speisen bzw. der mit Speisen gefüllten Behälter und einer höhenverstellbaren Heizeinrichtung. Eine solche Vorrichtung ist zum Beispiel in GB-A-974 759 offenbart.

Vorrichtungen zum Überbacken von Speisen sind unter dem Fachnamen "Salamander" bekannt und beispielsweise in dem Internationalen Geschmacksmuster DM 010 450 dargestellt Salamander finden vor allem in Großküchen Anwendung, wo sie zum Gratinieren von verschiedenstem Gratiniergut, beispielsweise von Steaks oder auch von Blumenkohl, Verwendung finden Auch Suppen werden vor dem Servieren überbacken, beispielsweise mit einer Käseschicht.

Aber auch ein Erhitzen oder Erwärmen oder auch nur Warmhalten der Speisen durch oberhalb der Speisen angegrdnete Heizeinrichtungen ist bekannt.

Vor allem beim Einsatz im kommerziellen Bereich, etwa in Großküchen, müssen die Geräte robust und funktionell sein, Fehlbedienungen sollten so weit wie möglich ausgeschlossen sein.

Zu bedenken ist auch, daß beim Überbacken Temperaturen um 250°C entstehen können, so daß durchaus die Gefahr von Verbrennungen bei unaufmerksamem Bedienungspersonal besteht.

Ein Problem insbesondere bei Salamandern besteht darin, daß die Heizeinrichtung möglichst einen optimalen Abstand zum überbackenden Gut haben sollte Dies führt jedoch dazu, daß die Behälter mit den Speisen nur noch unbequem in den Salamander gestellt bzw. aus diesem entnommen werden können, vor allem wenn man berücksichtigt, daß die Bedienungsperson dann durch Unaufmerksamkeit leicht an die Heizeinrichtung geraten kann.

Außerdem sind die Höhenabmessungen der zu überbackenden Speisen stets verschieden, was an den Beispielen Steak einerseits und Blumenkohl andererseits unmittelbar klar wird.

Um diesem Problem zu begegnen, werden in jüngster Zeit die Meizeinrichtungen höhenverstellbar eingerichtet. Die Bedienungsperson schiebt die zu überbackende Speise auf eine Grundplatte und fährt anschließend die Heizeinrichtung aus einer weit oberhalb der Speisen befindlichen Ruhestellung in eine nach Augenmaß abgeschätzte Heizposition knapp oberhalb des Gratiniergutes. Dann schaltet sie die Heizung ein. Nach der Benutzung wird die Heizung ausgeschaltet, die Heizeinrichtung wieder in ihre Ruhestellung gefahren und die fertige Speise entnommen.

Die Nachteile dieses Vorgehens bestehen darin, daß zum einen der Abstand zum Gratiniergut nur geschätzt wird und daher durchaus falsch gewählt werden kann. Zum zweiten neigt das Bedienungspersonal erfahrungsgemäß dazu, die Heizeinrichtung nicht abzuschalten, sondern auch in der Ruhestellung laufen zu lassen. Dadurch entsteht neben dem erhöhten Energieaufwand auch eine ständige potentielle Verletzungsgefahr.

Aufgabe der Erfindung ist es demgegenüber, eine gattungsgemäße Vorrichtung vorzuschlagen, mit der ein sichereres Überbacken, Erwärmen, Erhitzen oder Warmhalten der Speisen möglich ist.

Diese Aufgabe wird dadurch gelöst, daß eine zur Grundplatte im wesentlichen parallel verlaufende Lichtschranke vorgesehen ist, die im Abstand zur Heizeinrichtung angeordnet und mit der Heizeinrichtung höhenverstellbar ist.

Mit einer solchen Lichtschranke lassen sich Salamander und andere gattungsgemäße Vorrichtungen so ausstatten, daß die beschriebenen Nachteile gelöst werden.

Die Lichtschranke verläuft parallel im Abstand unterhalb der Heizeinrichtung. Wird nun die höhenverstellbare Heizeinrichtung in Richtung auf das Gratiniergut bzw. die Speisen gefahren, so wird die Lichtschranke in dem Moment unterbrochen, wo der oberste Bereich der Speise von der Lichtschranke erreicht wird.

Im Grunde könnte jetzt ein Signal abgegeben werden, das die Bedienungsperson darüber informiert, daß jetzt die optimale Position erreicht ist. Zweckmäßig jedoch wird ein motorischer Antrieb vorgesehen, so daß überhaupt keine manuelle Betätigung mehr erforderlich ist. D.h., die Bedienungsperson schaltet den in der Ruheposition befindlichen Salamander ein, daraufhin fährt der motorische Antrieb die Heizeinrichtung herunter in Richtung zur Speise, bis die Lichtschranke unterbrochen wird und schaltet dann ab.

Auf diese Weise wird stets die optimale Position zum Überbacken erreicht.

Entsprechendes gilt selbstverständlich für andere gattungsgemäße Vorrichtungen zum Erwärmen etc. von Speisen.

Mit der gleichen Automatik kann nach Erreichen der optimalen Position die Heizeinrichtung eingeschaltet werden. Mit dem Einschalten kann zugleich eine Zeitschaltuhr vorgesehen werden, die auch eine optimale Zeitdauer des Gratiniervorganges vorgibt. Nachdem die optimale Zeitdauer verstsrichen ist, schaltet die Heizeinbrichtung automatisch ab und fährt wieder in ihre Ruheposition zurück.

Als Option können dabei optische oder akustische Signale abgegeben werden, um das Bedienungspersonal auf die Fertigstellung der Speise hinzuweisen.

Für unterschiedliche Speisen sind unterschiedliche Gratinierzeiten optimal. Es wird daher bevorzugt, wenn auf einem entsprechenden Bedienfeld das Starten des Gratiniervorganges durch Betätigung verschiedener Starttasten erfolgern kann, beispielsweise auf einer Folientastatur. Folientastaturen eigenen sich besonders zum Einsatz bei Küchengeräten, da sie besser abschirmbar sind als herkömmliche Tasten.

Der Abstand der Lichtschranke zur Heizeinrichtung liegt bevorzugt zwischen 40 und 80 mm. Insbesondere ein Abstand zwischen 55 und 65 mm gewährleistet qualitativ hochwertige Produkte.

Für die Mehrzahl der Verwendungszwecke ist ein fester Abstand der Lichtschranke zur Heizeinrichtung ausreichend. Die Lichtschranke ist dann abstandsfest mit der Heizeinrichtung verbunden und fährt mit dieser höhenverstellbar herauf bzw. herunter.

In besonderen Anwendungsfällen kann es jedoch zweckmäßig sein, auch diesen Abstand abhängig beispielsweise von unter schiedlichen Speisen variieren zu können.

Hierfür wird eine erfindungsgemäße Vorrichtung dadurch gekennzeichnet, daß die Lichtschranke relativ zur Heizeinrichtung höhenverstellbar ist.

Beispielsweise durch die schon oben beschriebene Folientastatur kann neben der Zeit auch zugleich ein optimaler Abstand der Heizeinrichtung von den Speisen vorgegeben werden.

Vor oder während des Herunterfahrens der Heizeinrichtung in Richtung auf die Speisen kann dann der relative Abstand der Lichtschranke zur Heizeinrichtung variiert werden. Dadurch wird gewährleistet, daß dann, wenn die Lichtschranke durch den obersten Bereich der zu überbackenden Speise unterbrochen wird, zugleich auch die Heizeinrichtung in richtigem, gewunschtem Abstand zur Speise steht.

Für die Anordnung der Lichtschranke gibt es noch mehrere Alternativen. Dabei ist daran zu denken, daß jede Lichtschranke aus einer Lichtquelle und einem zugeordneten Sensor besteht.

Besonders bevorzugt wird es, wenn der Sensor am Seitenholm der Vorrichtung angeordnet ist. Dieser Seitenholm kann auch den motorischen Antrieb und das Bedienfeld aufnehmen; an ihm fährt die Heizeinrichtung herauf bzw. herab.

Der Sensor kann in Form eines Bandsensors auf der Innenseite, die der Grundplatte mit den Speisen benachbart ist, ortsfest angebracht werden. Dann ist es lediglich noch erforderlich, die Lichtquelle auf der anderen Seite der Grundplatte gemeinsam mit der Heizeinrichtung verfahrbar anzuordnen. Dies kann beispielsweise dadurch erfolgen, daß sie an einem Teil des Gehäuses der Heizeinrichtung herabhängend befestigt ist.

Alternativ können auch Sensor und Lichtquelle beide fest mit der Heizeinrichtung bzw. deren Gehäuse verbunden werden.

Für die Lichtschranke wird es bevorzugt, wenn das Licht ihrer Lichtquelle im Wellenlängenbereich zwischen 400 und 800 nm liegt, also im Bereich des sichtbaren Lichtes. Infrarotlicht ist beim Einsatz im Küchenbereich relativ störanfällig; ultraviolette Strahlung ist ebenfalls ungünstig.

Die vorgeschlagene Vorrichtung ermöglicht einen automatischen Ablauf und ist praktisch ohne Aufsicht zu betreiben. Fehlbedienungen sind praktisch ausgeschlossen.

Zugleich wird sehr viel Energie gespart, da die Heizung nicht dauernd eingeschaltet ist und darüber hinaus auch lediglich dann Energie verbraucht, wenn diese für den Überbackvorgang (bzw. das Erhitzen, Erwärmen, Warmhalten) benötigt wird. Bevorzugt handelt es sich um eine Halogenheizung, denn Strahlungsheizungen ermöglichen eine schnellere Energieübertragung und damit einen schnelleren Gratiniervorgang.

Ein weiterer Vorteil entsteht funktionsbedingt: Ist die Sensorik beispielsweise durch Fettspritzer oder andere Verschmutzungen gestört, so wird automatisch das Gerät blockiert. Es ist also nicht möglich, daß durch Funktionsausfall die Heizeinrichtung etwa bis in die Speise herein heruntergefahren wird. Statt dessen wird für das Bedienungspersonal (unmittelbar erkennbar, daß ein Fehler vorliegt, und eine Reinigung kann sogleich vorgenommen werden.

Um zu einer besonders gleichmäßigen Energieübertragung auf die Speise zu kommen, wird in einer bevorzugten Ausführungsform der Erfindung ein Abschnitt der Grundplatte als drehbarer Teller mit einem Antrieb ausgeführt. Auf diese Grundplatte kann dann die Speise bzw. der mit Speisen gefüllte Behälter abgestellt werden. Wird die Heizeinrichtung jetzt heruntergefahren bzw. eingeschaltet, kann gleichzeitig der Antrieb in Tätigkeit versetzt werden und die Speise auf diese Weise drehen. Dadurch kann ebenfalls eine ungleiche Wärmeverteilung ausgeglichen werden.

Die Strahlungsheizung kann sowohl zentrisch als auch flächig vorgesehen werden, je nach den überwiegend beabsichtigten Einsatzzwecken und beispielsweise Kostengesichtspunkten. Eine zentrische Anordnung der Wärmeverteilung der Strahlung ist im Hinblick auf die im allgemeinen etwa kreisförmigen Speisen (vgl. Blumenkohl, Suppentassen) zu bevorzugen.

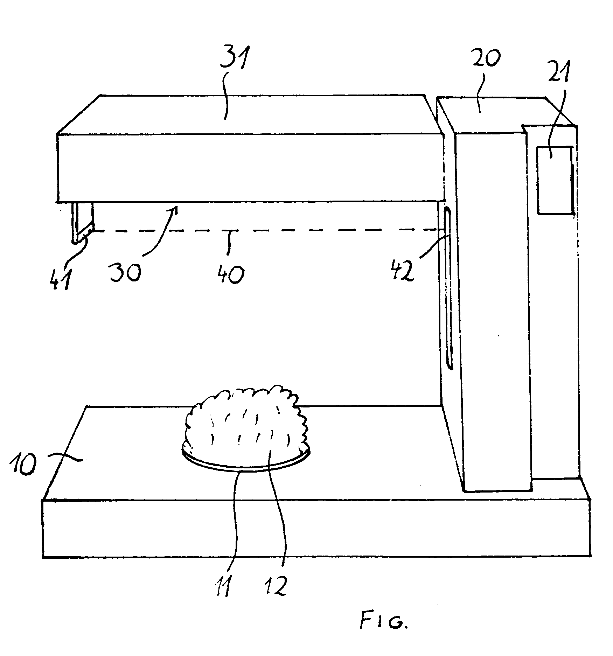

Im folgenden wird anhand der Zeichnung ein Ausführungsbeispiel der Erfindung im einzelnen beschrieben:
Die Figur zeigt eine schematische Ansicht eines erfindungsgemäßen Salamanders von der Seite.

Auf einer Grundplatte 10 ist ein Speisenbehälter 11 mit darin befindlicher Speise 12 angeordnet. Speisenbehälter 11 und Speise 12 können beliebig hereingestellt und entnommen werden, sind nicht Teil der Vorrichtung und nur beispielhaft gewählt.

Die Grundplatte 10 kann entweder einen Grillrost oder auch eine geriffelte Grundfläche aufweisen. Sie sollte möglichst schmutzunempfindlich sein und keine vorspringenden Ecken und Kanten aufweisen. Auch die anderen Flächen des Gerätes sind möglichst glatt und insbesondere aus Chromnickelstahl hergestellt.

Seitlich von der Grundplatte 10 ist ein Seitenholm 20 vorgesehen. Dieser steht vertikal und trägt ein Bedienfeld mit Bedienungselementen 21. In ihm (nicht dargestellt) ist ein motorischer Antrieb, beispielsweise ein Paternosterantrieb, zur stufenlosen, leichtgängigen Höhenverstellung vorgesehen.

Oberhalb der Speise 12 befindet sich eine Heizeinrichtung 30 in einem Gehäuse 31. Diese Heizeinrichtung 30 ist eine Halogenstrahlungsheizung. Gehäuse 31 und Heizeinrichtung 30 sind mit der erwähnten Höhenverstellung aus der dargestellten Ruheposition in Richtung zur Speise 12 verfahrbar. Auch das Gehäuse 31 ist möglichst glatt und ohne vorspringende Kanten ausgeführt. Zugleich ist es möglichst gegen die Heizung abgeschirmt, um Verbrennungen durch Berühren zu vermeiden.

Unterhalb der Heizeinrichtung 30 befindet sich eine Lichtschranke 40, die im wesentlichen horizontal und damit parallel zur Heizeinrichtung 30 verläuft. Die Lichtschranke 40 besitzt eine Lichtquelle 41 für insbesondere Licht im Wellenlängenbereich zwischen 400 und 800 nm und einen Sensor 42.

Die Lichtquelle 41 ist im dargestellten Beispiel abstandsfest zur Heizeinrichtung 30 und hängt in der Figur links vom Gehäuse 31 herab. Der Sensor 42 ist in Form eines Bandsensors ausgeführt.

Das von der Lichtquelle 41 ausgestrahlte Licht trifft auf einen Bereich des Sensors 42. Wird die Heizeinrichtung 30 abgefahren, so bewegt sich automatisch damit die Lichtquelle 41 nach unten. Das von der Lichtquelle 41 ausgestrahlte Licht trifft damit auf immer weiter unten liegende Bereiche des Bandsensors 42. In dem Moment, in dem der oberste Bereich der Speise 12 vom Lichtstrahl der Lichtquelle 41 erreicht wird, fällt kein Licht mehr auf den Sensor 42.

Damit erkennt die Automatik des Gerätes, daß die optimale Stellung der Heizeinrichtung 30 in bezug auf die Speise 12 erreicht ist und stoppt die weitere Bewegung der Heizeinrichtung 30 mit den mit ihr verbundenen Elementen.

Bereits während des Herunterfahrens wird die Heizeinrichtung 30 eingeschaltet. Grundsätzlich müßte dies erst erfolgen, wenn die optimale Stellung der Heizeinrichtung 30 erreicht ist; da diese jedoch eine gewisse Einschaltzeit benötigt, ehe sie ihre volle Wirkung entfaltet und zugleich an eine zeitsparende Lösung zu denken ist, wird die Automatik des Gerätes so eingestellt, daß die Einschaltzeit der Heizeinrichtung 30 berücksichtigt wird und eine entsprechend frühzeitige Einschaltung erfolgt.

Die Heizeinrichtung 30 führt den Überbackvorgang der Speise 12 im Speisebehälter 11 durch. Nach einer vorgegebenen Zeit schaltet eine Zeitschaltautomatik die Heizeinrichtung 30 wieder ab, wobei etwaige Abkühlbzw. Ausschaltzeiten berücksichtigt werden können. Nach bzw. während des Ausschaltens fährt die Heizeinrichtung 30 mit Gehäuse 31 und Lichtquelle 41 zurück in die Ruheposition.

Die gewünschte Zeitspanne kann über das Bedienfeld mit den Bedienungselementen 21 vorgewählt werden. Dort kann auch eine Anzeige zur Angabe der noch verbliebenen Backzeit vorgesehen werden, um dem Bedienungspersonal eine Abschätzung zu ermöglichen, wann die zu überbackende Speise fertig sein wird. Im allgemeinen liegen die Gesamtbackdauern im Bereich zwischen 30 und 180 Sekunden, wenn eine Halogenstrahlungsheizung verwendet wird.

Vorgesehen werden können auch Stopptasten, die bei Fehlbedienungen ein sofortiges Abschalten des Gerätes ermöglichen. Durch die Halogenheizung kann darüber hinaus die Wärmeverteilung der Strahlung möglichst zentrisch erfolgen und so ein optimales Überbacken der im allgemeinen etwa kreisförmigen Speisen begünstigen (vgl. Blumenkohl, Suppentassen).

Anstelle der zentrischen wärmeverteilung der Strahlung ist auch eine flächig gleichmäßige möglich. Als weitere Alternative können auch Abschnitte der Grundplatte beweglich gehalten werden. Insbesondere bietet sich dafür an, einen kreisförmigen Abschnitt drehbar anzulegen und den Antrieb ebenfalls mit der Zeitschaltautomatik des Gerätes entsprechend zu koppeln, so daß die Speise unter der insoweit feststehenden Heizeinrichtung hinweg gedreht und gleichmäßiger bestrahlt werden kann.

## Patentansprüche

1. Vorrichtung zum Erhitzen, Erwärmen oder Warmhalten, insbesondere zum Überbacken von Speisen, insbesondere Salamander, mit einer Grundplatte zur Aufnahme der Speisen bzw. der mit Speisen gefüllten Behälter und einer höhenverstellbaren Heizeinrichtung, **dadurch gekennzeichnet,** daß eine zur Grundplatte (10) im wesentlichen parallel verlaufende Lichtschranke (40) vorgesehen ist, die im Abstand zur Heizeinrichtung (30) angeordnet und mit der Heizeinrichtung (30) hähenverstellbar ist.

2. Vorrichtung nach Anspruch 1, **dadurch gekennzeichnet,** daß die Lichtschranke (40) relativ zur Heizeinrichtung (30) höhenverstellbar ist.

3. Vorrichtung nach Anspruch 1 oder 2, **dadurch gekennzeichnet,** daß der Abstand der Lichtschranke (40) zur Heizeinrichtung (30) zwischen 40 und 80 mm liegt.

4. Vorrichtung nach Anspruch 3, **dadurch gekennzeichnet,** daß der Abstand der Lichtschranke (40) zur Heizeinrichtung (30) zwischen 55 und 65 mm liegt.

5. Vorrichtung nach einem der vorstehenden Ansprüche, **dadurch gekennzeichnet,** daß die Heizeinrichtung (30) eine Halogenstrahlungsheizung aufweist.

6. Vorrichtung nach einem der vorstehenden Ansprüche, **dadurch gekennzeichnet,** daß die Lichtquelle (41) der Lichtschranke (40) Licht im Wellenlängenbereich zwischen 400 und 800 nm ausstrahlt.

7. Vorrichtung nach einem der vorstehenden Ansprüche, **dadurch gekennzeichnet,** daß der Sensor (42) der Lichtschranke (40) in einem vertikal verlaufenden Seitenholm (20) benachbart zur Grundplatte (10) angeordnet ist und aus einem vertikal verlaufenden lichtempfindlichen Sensorenband besteht.

8. Vorrichtung nach einem der vorstehenden Ansprüche, **dadurch gekennzeichnet,** daß die Heizeinrichtung (30) in einem Gehäuse (31) angeordnet ist, und daß die Lichtquelle (41) der Lichtschranke (40) fest mit dem Gehäuse (31) verbunden ist.

9. Vorrichtung nach einem der vorstehenden Ansprüche, **dadurch gekennzeichnet,** daß ein Abschnitt der Grundplatte (10) als drehbare Fläche mit einem Antrieb ausgebildet ist.

## Claims

1. A device for heating foods, warming foods or keeping foods warm, in particular for browning the top of foods, in particular a "salamander", comprising a base plate for the accommodation of the foods or the containers filled with foods and a vertically adjustable heating device, characterised in that a light barrier (40) is provided which extends substantially in parallel to the base plate (10) and which is arranged at a distance from the heating device (30) and is vertically adjustable with the heating device (30).

2. A device as claimed in Claim 1, characterised in that the light barrier (40) is vertically adjustable relative to the heating device (30).

3. A device as claimed in Claim 1 or 2, characterised in that the distance between the light barrier (40) and the heating device (30) is between 40 and 80 mm.

4. A device as claimed in Claim 3, characterised in that the distance between the light barrier (40) and the heating device (30) is between 55 and 65 mm.

5. A device as claimed in one of the preceding claims characterised in that the heating device (30) comprises a halogen radiation heating unit.

6. A device as claimed in one of the preceding claims, characterised in that the light source (41) of the light barrier (40) emits light in the wave length range of between 400 and 800 nm.

7. A device as claimed in one of the preceding claims, characterised in that the sensor (42) of the light barrier (40) is arranged in a vertically extending side member (20) adjacent to the base plate (10) and consists of a vertically extending, light-sensitive sensor strip.

8. A device as claimed in one of the preceding claims, characterised in that the heating device (30) is arranged in a housing (31) and that the light source (41) of the light barrier (40) is permanently connected to the housing (31).

9. A device as claimed in one of the preceding claims, characterised in that a portion of the base plate (10) has the form of a rotatable surface with a drive means.

## Revendications

1. Dispositif pour chauffer, réchauffer ou tenir au chaud, notamment faire gratiner des aliments, appelé plus spécifiquement salamandre, comportant une plaque de base destinée à recevoir les aliments ou le récipient contenant les aliments, et comportant un dispositif de chauffage réglable en hauteur, caractérisé en ce qu'est prévue une barrière lumineuse (40) s'étendant essentiellement parallèlement à la plaque de base (10), qui est disposée avec un écart par rapport au dispositif de chauffage (30) et qui peut être déplacée en hauteur avec le dispositif de chauffage (30).

2. Dispositif selon la revendication 1, caractérisé en ce que la barrière lumineuse (40) peut être déplacée en hauteur par rapport au dispositif de chauffage (30).

3. Dispositif selon la revendication 1 ou 2, caractérisé en ce que l'écart entre la barrière lumineuse (40) et le dispositif de chauffage (30) est compris entre 40 et 80 mm.

4. Dispositif selon la revendication 3, caractérisé en ce que l'écart entre la barrière lumineuse (40) et le dispositif de chauffage (30) est compris entre 55 et 65 mm.

5. Dispositif selon l'une des revendications précédentes, caractérisé en ce que le dispositif de chauffage (30) présente un chauffage halogène à rayonnement.

6. Dispositif selon l'une des revendications précédentes, caractérisé en ce que la source lumineuse (41) de la barrière lumineuse (40) émet de la lumière qui se situe dans une gamme d'ondes comprise entre 400 et 800 nm.

7. Dispositif selon l'une des revendications précédentes, caractérisé en ce que le capteur (42) de la barrière lumineuse (40) est disposé dans un montant latéral (20) vertical à proximité de la plaque de base (10) et se compose d'une bande sensorielle photosensible s'étendant verticalement.

8. Dispositif selon l'une des revendications précédentes, caractérisé en ce que le dispositif de chauffage (30) est placé dans un corps (31) et en ce que la source lumineuse (41) de la barrière lumineuse (40) est reliée fixement au corps (31).

9. Dispositif selon l'une des revendications précédentes, caractérisé en ce qu'une parrie de la plaque de base (10) est réalisée sous forme de surface tournante munie d'un entraînement.
